Europäisches Patentamt

European Patent Office

Office européen des brevets

(11) Numéro de publication: **0 128 790**
**A1**

## (12) DEMANDE DE BREVET EUROPEEN

(21) Numéro de dépôt: 84400938.1

(51) Int. Cl.³: **H 04 N 5/26**

(22) Date de dépôt: 09.05.84

(30) Priorité: 11.05.83 FR 8307906

(43) Date de publication de la demande: 19.12.84
Bulletin 84/51

(84) Etats contractants désignés: BE DE GB NL

(71) Demandeur: **THOMSON-CSF, 173, Boulevard Haussmann, F-75379 Paris Cedex 08 (FR)**

(72) Inventeur: **Blain, Gérard, THOMSON-CSF SCPI 173, bld Haussmann, F-75379 Paris Cedex 08 (FR)**

(74) Mandataire: **Turlèque, Clotilde et al, THOMSON-CSF SCPI 173, Bld Haussmann, F-75379 Paris Cedex 08 (FR)**

(54) **Viseur électronique pour caméra de télévision couleur.**

(57) Viseur électronique équipé d'un tube cathodique trichrome et ayant une entrée de signal vidéo composite (VC) à laquelle sont connectées deux voies de signal: une voie (3) restituant trois signaux de couleurs R, B, V, cette voie étant constituée par deux circuits intégrés LSI standard (33 et 34), et une voie (4) fournissant un signal de correction, comportant un circuit différentiateur (42) et un circuit (47) de commande du contraste et de luminance. Les signaux de couleurs R, B et V sont appliqués aux entrées d'amplificateurs vidéo (6) par l'intermédiaire d'additionneurs (7) pour additionner le signal de correction à ces signaux R, V, B pour renforcer les détails de l'image TV dans le but de permettre à l'opérateur de la caméra de focaliser, de manière optimale, l'image optique captée par la caméra.

EP 0 128 790 A1

1

Viseur électronique pour caméra de télévision couleur

La présente invention se rapporte aux caméras de télévision couleur ; elle concerne un viseur électronique destiné à équiper de telles caméras.

Les caméras TV couleur utilisées pour les prises de vue en studio ou en extérieur comportent essentiellement deux sous-ensembles : un sous-ensemble optique, assez semblable dans son principe à ceux utilisés dans le domaine du cinéma, et un sous-ensemble électronique qui rassemble les éléments électroniques transformant l'image optique en un signal électrique correspondant. La tâche du "cadreur", ou opérateur de la caméra, étant de cadrer l'image de la scène à téléviser et d'effectuer la mise au point optique de cette image, il est nécessaire d'équiper ces caméras de prises de vue d'un viseur électronique. Un viseur électronique comporte un petit tube cathodique dont l'écran est visible à l'arrière de la caméra, et sur lequel apparaît l'image captée par la caméra. Pour permettre un réglage optimal de la focalisation de l'image optique de la caméra, il est souhaitable que dans l'image visualisée sur l'écran du viseur électronique les détails soient renforcés. Il n'est pas indispensable que l'image visualisée soit réaliste, car ce n'est pas l'image effectivement transmise vers l'émetteur, l'accentuation des détails peut donc être aussi poussée que le cadreur le souhaite pour faciliter la mise au point optique.

Généralement les viseurs électroniques qui équipent les caméras de télévision couleur fournissent uniquement une image TV achrome. En effet, de tels équipements sont d'un coût modéré du fait leur complexité relativement faible, et en outre leur fiabilité est élevée. Il est pourtant souhaitable que l'opérateur de la caméra dispose d'une image vidéo qui soit aussi représentative que possible de l'image polychrome générée par la caméra et que cet opérateur ait la possibilité complémentaire de renforcer les détails de l'image afin de lui permettre d'effectuer une focalisation, aussi optimale que possible, de l'image optique captée par la caméra. Toutefois, la réalisation d'un viseur électronique polychrome, du fait de sa complexité, est un équipement dont le coût est d'autant plus important que l'on cherche à maintenir une performance de fiabilité élevée. De plus, les dimensions physiques d'un viseur électronique polychrome sont importantes si celui-ci est réalisé de manière classique c'est à dire par l'assemblage de composants discrets. Ces dernières années, certains fabricants de composants semiconducteurs ont développé des circuits intégrés à grande échelle (LSI) qui rassemblent les principales fonctions rencontrées dans un poste TV grand public. La contre-partie des avantages que procurent les circuits LSI standards est une souplesse d'utilisation réduite. En effet, ces circuits LSI sont spécialement conçus pour la réalisation des récepteurs classiques grand public.

Si l'on veut utiliser des circuits LSI standards dans la construction d'un viseur électronique polychrome, il est nécessaire de prévoir l'adjonction de fonctions complémentaires, notamment celles permettant de renforcer d'une manière contrôlée les détails de l'image TV. Dans les viseurs électroniques achromes, le renforcement des détails de l'image TV est obtenu simplement en augmentant d'au moins 6dB le gain des amplificateurs vidéofréquence dans la région des fréquences élevées de leur bande passante. Cette technique classique n'est plus applicable pour un viseur polychrome, si l'on utilise des circuits intégrés LSI standards car la dynamique de leurs amplificateurs à vidéofréquence est trop limitée. Une augmentation de 6 dB de leur gain en tension pour les hautes fréquences provoque le doublement de la tension de crête du signal, ce qui cause finalement un écrêtage de celui-ci.

Le but que vise l'invention est de réaliser un viseur électronique polychrome au moyen de circuits intégrés LSI standards et d'incorporer des moyens complémentaires permettant de renforcer les détails de l'image TV présentée à l'opérateur de la caméra.

Selon l'invention, un viseur électronique pour caméra de télévision couleur, recevant un signal vidéo composite fourni par la caméra et visualisant une image sur un tube cathodique trichrome, en accentuant les détails, est caractérisé en ce qu'il comporte :

- une première voie pour recevoir le signal vidéo composite et restituer trois signaux de couleur, comportant au moins un décodeur de signal de chrominance et un circuit de commande vidéo, de type intégré, conçus pour les téléviseurs classiques ;

- une seconde voie pour recevoir le signal vidéo composite et restituer un signal correction correspondant aux détails de l'image ;

- trois additionneurs analogiques pour additionner le signal de correction à chacun des signaux de couleur, les trois signaux résultants constituant des signaux de commande du tube cathodique ;

- trois amplificateurs vidéofréquence pour amplifier les trois signaux de commande du tube cathodique ;

- un séparateur de signaux de synchronisation pour recevoir le signal vidéo composite et restituer des signaux de synchronisation, constitué d'un circuit intégré conçu pour les téléviseurs classiques.

D'autres caractéristiques apparaîtront dans la description détaillée de l'invention, faite en regard de dessins annexés ; sur ces dessins :

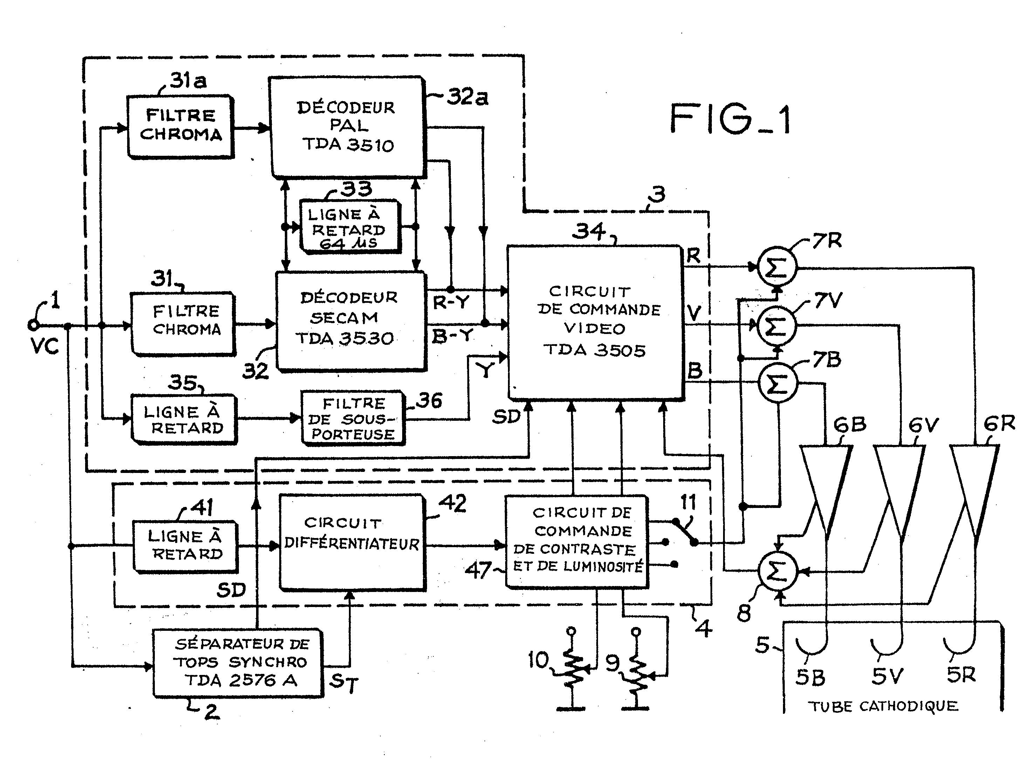

- la figure 1 est un schéma synoptique d'un exemple de réalisation du viseur électronique selon l'invention ;

- la figure 2 représente la forme d'un signal, dit"SANDCASTLE", de cet exemple de réalisation ;

- les figure 3 et 6 représentent le schéma synoptique plus détaillé de deux parties de cet exemple de réalisation ;

- les figures 4a, 4b et 4c, montrent la forme des principaux signaux du circuit de la figure 3 ;

- la figure 5 représente le signal résultant de la sommation des signaux montrés aux figures 4a et 4c.

Dans cet exemple de réalisation le viseur électronique selon l'invention peut fonctionner selon les standards PAL et SECAM. Il comprend : une borne d'entrée 1 recevant un signal vidéo composite VC fourni par la caméra ; une première voie 3 recevant le signal VC et restituant trois signaux de couleur R, V, B ; une seconde voie 4, recevant le signal VC et fournissant un signal de correction correspondant aux détails de l'image car il est constitué d'un signal de luminance extrait du signal VC et différentié deux fois pour ne garder que les composantes correspondant aux détails de l'image ; un séparateur 2 de signaux de synchronisation, recevant le signal VC et en extrayant des signaux de synchronisation nécessaires pour le fonctionnement de l'ensemble du viseur ; deux potentiomètres 9 et 10, accessibles au cadreur pour régler le contraste et la luminosité de l'image visualisée par le viseur ; trois additionneurs analogiques 7R, 7V, 7B pour additionner le signal de correction à chacun des signaux de couleur R, V, B ; trois amplificateurs vidéo de puissance, amplifiant le signal fourni par les trois additionneurs 7R, 7V, 7B ; un additionneur analogique 8 additionnant trois courants prélevés respectivement sur les courants de sortie des trois amplificateurs 6B, 6V, 6R ; un tube cathodique trichrome 5 dont les cathodes 5R, 5V et 5B sont indépendantes et connectées respectivement à la sortie des trois amplificateurs de puissance à vidéofréquence 6R, 6V et 6B.

La mise en oeuvre d'une seconde voie 4 séparée de la première voie 3 jusqu'aux entrées des amplificateurs vidéo 6B, 6V, 6R, permet de s'affranchir de la dynamique limitée de la première voie 3.

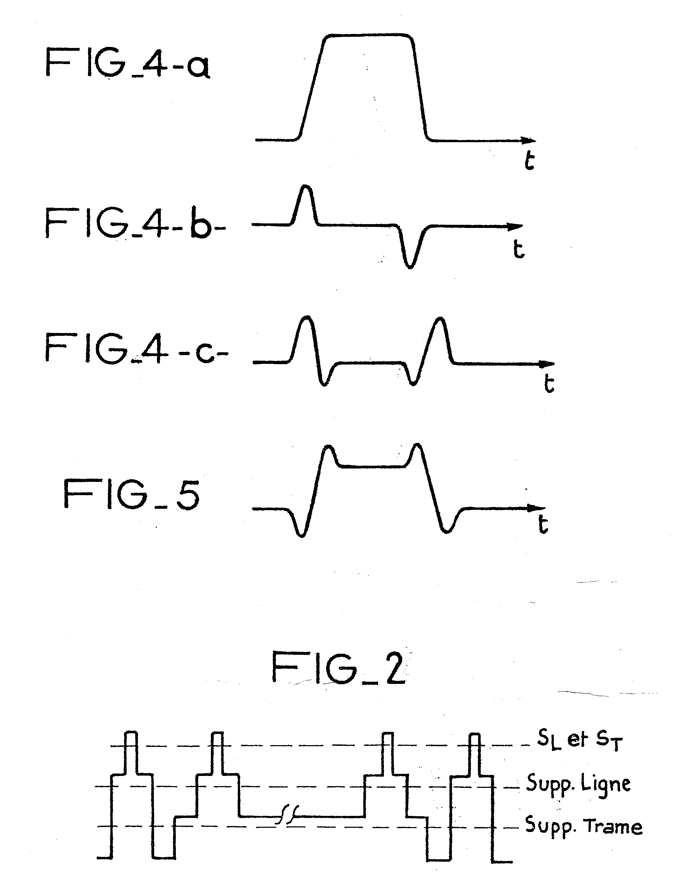

Le séparateur 2, qui réalise une séparation et un tri des tops de synchronisation des balayages lignes et trames, est essentiellement constitué par un circuit intégré du type TDA 2576A fabriqué par R.T.C. Il fournit à la seconde voie 4 des tops $S_T$ de synchronisation de trames et à la première voie 3 un signal appelé "SANDCASTLE" ou signal SD, du fait de sa forme particulière qui est représentée sur la figure 2. Ce signal SD est un signal complexe à plusieurs niveaux qui permet de disposer sur une liaison unique, des signaux suivants : le signal de suppression de trame, le signal de suppression de ligne, les tops $S_L$ de synchronisation ligne et les tops $S_T$ de synchronisation trame.

La première voie 3 est essentiellement constituée par un circuit intégré LSI 32, décodeur SECAM du type TDA 3530 fabriqué par R.T.C., ayant trois sorties qui sont connectées aux entrées de trois voies de chrominance d'un circuit intégré LSI 34 dit de commande vidéo, du type TDA 3505 fabriqué par R.T.C. Le signal d'entrée VC est appliqué à un filtre 31 afin d'extraire le signal de chrominance et de l'appliquer à une entrée de signal de chrominance du décodeur SECAM 32. Ce dernier délivre sur deux sorties les composantes (R-Y) et (B-Y) du signal de chrominance. Une ligne à retard, de retard 64 microsecondes, est couplée au décodeur SECAM 32 pour réaliser le décodage SECAM.

Pour permettre d'utiliser aussi le viseur selon le standard PAL, il est prévu un décodeur PAL, 32a, constitué d'un circuit intégré TDA 3510 fabriqué par R.T.C., et un filtre de chrominance 31a. Ce dernier relie une entrée de chrominance du décodeur 32a à la borne d'entrée 1 du viseur. Le décodeur 32a est couplé à la ligne à retard 33 qui est commune pour le fonctionnement en PAL ou en SECAM. Les sorties des décodeurs 32 et 32a sont reliées en parallèle à des entrées de signaux R-Y et B-Y du circuit de commande vidéo 34.

Le signal d'entrée VC est également fourni à une voie de luminance, constituée par une ligne à retard 35 d'égalisation des retards de temps et par un filtre 36 de réjection de la sous-porteuse de chrominance, pour fournir le signal de luminance Y.

Les signaux de chrominance (R-Y) et (B-Y) et le signal de luminance Y sont appliqués respectivement à trois entrées du circuit 34 de commande vidéo. La fonction principale de ce circuit 34 est d'élaborer les trois signaux de couleur R,V et B. Il permet en outre de commander la luminosité et le contraste de l'image à l'aide de deux signaux continus fournis par deux sorties de la seconde voie 4, et de réguler le "niveau de noir" de l'image, c'est à dire de régler automatiquement et indépendamment la tension de blocage (cut-off) de chacun des canons électroniques du tube cathodique 5. A cet effet, le signal SD élaboré par le circuit 21 est appliqué à une entrée du circuit 34, tandis qu'une fraction de la somme des courants des cathodes du tube 5 est fournie en retour sur une entrée du circuit 34 par l'additionneur 8.

La seconde voie 4 est constituée essentiellement par une ligne à retard 41, un circuit différentiateur 42, un circuit 47 de commande de contraste et de luminance, et un commutateur 11. La ligne à retard 41 permet d'égaliser le retard de cette voie 4 pour que le signal soit bien synchrone avec les signaux de couleur R, V, B fournis par la première voie 3. La fonction du circuit 42, dont les éléments constitutifs seront décrits ultérieurement, est d'effectuer une opération de différentiation double du signal vidéo composite, puis d'éliminer la sous-porteuse de chrominance pour ne conserver que la luminance différentiée, et d'autre part d'inhiber la transmission du signal de correction dans la voie 4 pendant les lignes n° 1 à 24 de chaque trame.

En effet, pendant les lignes n° 22 à 24 de chaque trame le circuit 34 de commande vidéo réalise une mesure du courant de blocage des trois canons électroniques du tube cathodique 5, grâce au signal fourni par la sortie de l'additionneur 8, en mettant à profit le fait qu'il s'agit de lignes noires. Pour ne pas perturber cette mesure en commandant les trois canons par le signal de correction, il est prévu de bloquer sa transmission pendant lignes n° 1 à 24. A cet effet, les tops de synchronisation trame $S_T$ fournis par le circuit 21 sont appliqués à une entrée de commande de ce circuit 42.

Le circuit 47 de commande de contraste et de luminance permet le réglage des niveaux relatifs des signaux de couleurs et du signal de correction, et permet le réglage de contraste et de luminance de l'image visualisée à l'aide des potentiomètres de commande 9 et 10. Le commutateur 11 à trois positions permet au cadreur de sélectionner trois modes de fonctionnement de la seconde voie 4.

La figure 3 représente un schéma synoptique du circuit différentiateur 42. L'entrée de ce circuit 42 reçoit le signal vidéo-composite retardé par le circuit à retard 41. Ce circuit 42 comprend, en série, les éléments suivants : un premier étage différentiateur 43, un commutateur analogique 44, un potentiomètre 48, un second étage différentiateur 43' et un filtre de sous-porteuse 46. Ce circuit 42 comprend également une bascule monostable 45 ayant une entrée de déclenchement qui reçoit les tops de synchronisation de trames $S_T$ fournis par le séparateur 2. La sortie de la bascule monostable 45 est connectée à l'entrée de commande du commutateur analogique 44 et la durée du signal de sortie de cette bascule monostable est égale à la durée de 24 lignes TV pour bloquer la transmission dans le commutateur 44 pendant les lignes 1 à 24. Quand le commutateur est passant, le fonctionnement de ce circuit 42 est illustré par les figures 4a à 4c.

Sur la figure 4a, on a représenté un exemple, quelque peu idéalisé, de la composante de luminance du signal vidéo-composite. Cet exemple de composante de luminance a des fronts avant et arrière présentant des transitions relativement abruptes.

La figure 4b représente la composante de luminance du signal de sortie correspondant du premier étage différentiateur 43 et la figure 4c représente la composante de luminance du signal de sortie du second étage différentiateur 43'. Selon une variante de réalisation de la voie 4, le commutateur 44 peut être placé en amont du premier étage différentiateur 43, ou en aval du second étage différentiateur 43'. Le potentiomètre 48, accessible au cadreur, permet de régler l'ampleur de l'accentuation des détails, qui est obtenue. Un filtre de sous-porteuse 46 est placé en aval des circuits différentiateurs 43 et 46 pour éliminer la sous-porteuse de chrominance et ne conserver dans le signal de correction que la composante de luminance différentiée.

La figure 5 représente le signal de la figure 4a auquel a été superposé le signal de la figure 4c, c'est-à-dire la somme de la luminance différentiée et de la luminance non différentiée. Il apparaît que les variations de luminance, au voisinage des transitions, sont augmentées, ce qui permet de mieux visualiser les détails de l'image. Les bords de la zone de forte luminance sont soulignés par une bande où la luminance est accentuée, alors que les bords de la zone sombre sont accentués par une bande encore plus sombre. L'image visualisée n'est pas très réaliste : elle a un aspect artificiel, mais ce dispositif d'accentuation des détails est simple à réaliser et permet un réglage facile de la mise au point optique.

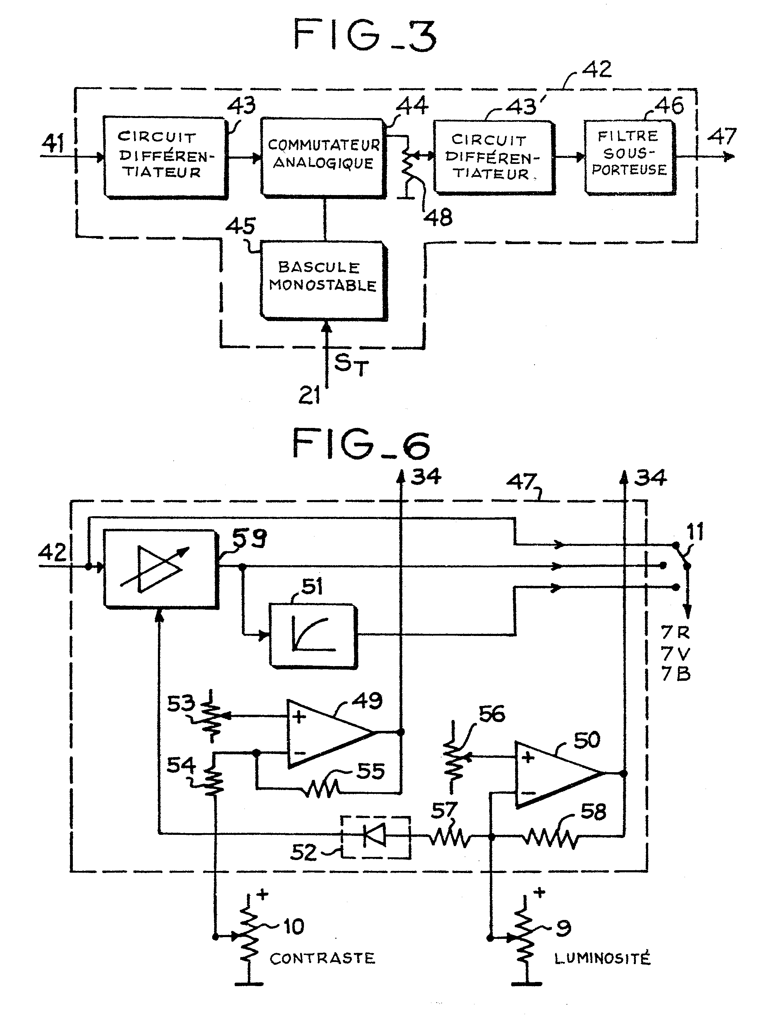

La figure 6 représente un schéma synoptique du circuit 47 et du commutateur 11 de la voie 4. Un amplificateur vidéofréquence 59, à gain commandable, est connecté entre la sortie du circuit différentiateur 42 et la première entrée du commutateur 11, la sortie de ce commutateur 11 étant connectée à une entrée commune des circuits sommateurs 7R, 7V et 7B. L'entrée de l'amplificateur 59 est connectée à une seconde entrée du commutateur 11 et la sortie de cet amplificateur 59 est connectée par l'intermédiaire d'un circuit non linéaire 51 à une troisième entrée du commutateur 11. Le circuit non-linéaire 51 atténue le signal de correction lorsqu'il y a une forte amplitude et il le transmet sans atténuation lorsqu'il a une faible amplitude. Le curseur du potentiomètre 10 de commande de contraste de l'image est connecté, d'une part, à l'entrée de commande de gain de l'amplificateur vidéofréquence 59 et, d'autre part, à l'entrée d'un premier amplificateur de tension continue constitué d'un amplificateur opérationnel 49 muni d'une boucle de contre-réaction constituée de deux résistances 54 et 55, et d'un potentiomètre 53 d'ajustage du point de repos.

La sortie de l'amplificateur 49 est reliée à l'entrée de commande de contraste du circuit 34. Le curseur du potentiomètre 9 de commande de luminosité de l'image est connecté à un second amplificateur de tension continue constitué : d'un amplificateur opérationnel 50 ; d'une résistance 58 reliant sa sortie à son entrée (-) ; et d'un potentiomètre 56 d'ajustage du point de repos. L'entrée (-) est reliée au curseur du potentiomètre 9. La sortie de l'amplificateur 50 est reliée à l'entrée de commande de luminosité du circuit 34.

Le curseur du potentiomètre 9 est relié aussi à l'entrée de commande de gain de l'amplificateur vidéofréquence 59 par un dispositif à seuil, constitué d'une résistance 57 et d'une diode 52 en série, afin d'augmenter sensiblement le niveau de lumière, par un décollement du noir, lorsque la commande de contraste est réduite, ce qui améliore la vision des détails.

Les fonctions du commutateur 11 sont les suivantes : lorsqu'il relie directement sa sortie à l'entrée du circuit 42, la commande de contraste de l'image n'influe pas sur le niveau du signal de correction ; lorsqu'il relie sa sortie à la sortie de l'amplificateur 42, la commande de contraste agit de façon linéaire sur les signaux de couleurs et sur le signal de correction ; et enfin, lorsqu'il relie sa sortie à la sortie du circuit non-linéaire 51, la commande de contraste agit d'une façon non-linéaire sur le signal de correction et d'une façon linéaire sur les signaux de couleurs. Le cadreur utilise le commutateur 11 pour sélectionner l'effet d'accentuation des détails, qu'il préfère en fonction du type d'image en cours de visualisation. Il est évident que de nombreuses variantes de réalisation de la seconde voie 4 peuvent être envisagées. Par exemple, le commutateur 11 et le circuit non linéaire 51 peuvent être supprimés pour simplifier les commandes du viseur au prix de la perte de certaines possibilités d'exploitation.

Les avantages présentés par un viseur de caméra réalisé conformément à l'invention sont : le coût de réalisation notablement réduit par l'utilisation de circuits intégrés standards destinés aux récepteurs TV grand public et une fiabilité est accrue du fait d'une réduction importante du nombre de composants électroniques et par voie de conséquence du nombre des soudures nécessaires à l'interconnexion de ces composants. De plus, si ce viseur électronique est équipé d'un tube cathodique d'un format de 13 à 19 cm, il est alors de dimensions réduites.

Le viseur électronique n'est pas limité dans ses caractéristiques à la forme de réalisation décrite, notamment le choix des circuits intégrés LSI utilisés peut être modifié pour utiliser des circuits équivalents fabriqués par d'autres sociétés.

## REVENDICATIONS

1. Viseur électronique pour caméra de télévision couleur, recevant un signal vidéo composite fourni par la caméra et visualisant une image sur un tube cathodique trichrome (5), en accentuant les détails, caractérisé en ce qu'il comporte :

- une première voie (3) pour recevoir le signal vidéo composite et restituer trois signaux de couleur (R, V, B), comportant au moins un décodeur de signal de chrominance (32, 32a) et un circuit de commande vidéo (34), de type intégré, conçus pour les téléviseurs classiques ;

- une seconde voie (4) pour recevoir le signal vidéo composite, et restituer un signal de correction correspondant aux détails de l'image ;

- trois additionneurs analogiques (7) pour additionner le signal de correction à chacun des signaux de couleur (R, V, B), les trois signaux résultants constituant des signaux de commande du tube cathodique (5) ;

- trois amplificateurs vidéofréquence (6B, 6V, 6R) pour amplifier les trois signaux de commande du tube cathodique (5) ;

- un séparateur (2) de signaux de synchronisation pour recevoir le signal vidéo composite et restituer des signaux de synchronisation, constitué d'un circuit intégré conçu pour les téléviseurs classiques.

2. Viseur selon la revendication 1, caractérisé en ce que la seconde voie (4) comporte en série deux circuits différentiateurs (43, 43') et un commutateur analogique (44) ; et comporte un circuit de temporisation (45) pour bloquer le commutateur pendant un nombre fixé de lignes, au début de chaque trame.

3. Viseur selon la revendication 1, caractérisé en ce que la seconde voie (4) comporte en outre en série :

- un circuit (47) de commande de contraste et de luminance comportant un amplificateur vidéofréquence (59) à gain commandable, amplifiant le signal de correction, avec un gain fonction d'un réglage (10) de contraste et d'un réglage (11) de luminosité de l'image.

4. Viseur selon la revendication 3, caractérisé en ce que le circuit (47) de commande de contraste et de luminosité comporte en outre un circuit non-linéaire (51) en série avec la sortie de l'amplificateur vidéofréquence (59) et un commutateur (11) permettant de transmettre vers les trois additionneurs (7) : soit le signal présent à l'entrée de l'amplificateur (59) ; soit le signal présent à sa sortie ; soit le signal présent à la sortie du circuit non-linéaire (51).

5. Viseur selon la revendication 3, caractérisé en ce que le circuit (47) de commande de constraste et de luminosité comporte un circuit à seuil (52, 57) couplant une entrée de commande de gain de l'amplificateur vidéofréquence (59) à un dispositif (9) fournissant une tension de réglage de la luminosité.

FIG_1

TUBE CATHODIQUE

1/3

0128790

FIG_4-a

FIG_4-b-

FIG_4-c-

FIG_5

FIG_2

$S_L$ et $S_T$

Supp. Ligne

Supp. Trame

## FIG_3

41 → CIRCUIT DIFFÉREN-TIATEUR (43) → COMMUTATEUR ANALOGIQUE (44) → CIRCUIT DIFFÉREN-TIATEUR (43') → FILTRE SOUS-PORTEUSE (46) → 47

48

42

BASCULE MONOSTABLE (45)

$S_T$

21

## FIG_6

42 → (59) → 34 ... 47 ... 34 → 11

7R
7V
7B

51

49
53
54
55

50
56
57
58

52

10 CONTRASTE

9 LUMINOSITÉ

# RAPPORT DE RECHERCHE EUROPEENNE

**Office européen des brevets**

0128790
Numéro de la demande

EP 84 40 0938

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | GB-A-2 054 317 (NIPPON VICTOR) <br> * Page 1, lignes 27-67 * | 1 | H 04 N 5/26 |
| A | DE-B-1 014 588 (RUNDFUNK-BETRIEBSTECHNIK) <br> * Colonne 1, lignes 19-29 * | 1 | |
| A | FR-A-2 465 383 (MATSUSHITA) <br> * Page 2, ligne 37 - page 3, ligne 22 * | 1 | |
| A | FR-A-2 508 750 (PHILIPS) | | |
| | ----- | | |

**DOMAINES TECHNIQUES RECHERCHES (Int. Cl. 3)**

H 04 N

Le présent rapport de recherche a été établi pour toutes les revendications

| Lieu de la recherche | Date d'achèvement de la recherche | Examinateur |
|---|---|---|
| LA HAYE | 05-09-1984 | CRISTOL Y. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82